# DEMANDE DE BREVET EUROPEEN

(11) **EP 3 547 475 A1**
(43) Date de publication de la demande: **02.10.2019**
(21) Numéro de dépôt: 19315018.2
(22) Date de dépôt: 28.03.2019
(51) Int. Cl.: H02H 5/06, H01F 27/40, H02H 5/08, H02H 7/04

(54) **MODULE DE SECURITE POUR TRANSFORMATEUR DE PUISSANCE HAUTE TENSION, ENSEMBLE DE SUPERVISION ET TRANSFORMATEUR DE PUISSANCE HAUTE TENSION ASSOCIE**

(30) Priorité: 29.03.2018 FR 1852773
(71) Demandeur: PASDT, 76530 Grand Couronne (FR)
(72) Inventeur: Lefevre, Gilles, 76530 Grand Couronne (FR)
(74) Mandataire: Fidal Innovation

(57) **Abrégé**

L'invention a pour objet un module de sécurité (3) pour un transformateur de puissance haute tension, HT, (1) équipé d'un module de détection d'anomalie (2), le module de sécurité (3) comprenant un boîtier (14) configuré pour être relié au module de détection d'anomalie (2), le boîtier (14) comprenant un moyen d'indication d'anomalie configuré pour indiquer au moins une anomalie signalée par le module de détection d'anomalie (2), le boîtier (14) étant en outre configuré pour être relié à un disjoncteur côté basse tension, BT, et à un disjoncteur côté HT, le module de sécurité (3) étant configuré pour déclencher les disjoncteurs côté BT et HT en fonction de la détection d'anomalie, le module de sécurité (3) étant configuré pour être alimenté par une alimentation indépendante.

## Description

La présente invention concerne le domaine des transformateurs de puissance haute tension, et porte en particulier sur un module de sécurité pour un transformateur de puissance haute tension, sur un ensemble de supervision comprenant un tel module de sécurité et sur un transformateur de puissance haute tension associé.

Les transformateurs de puissance sont des composants électriques haute tension essentiels dans l'exploitation des réseaux électriques. On les retrouve dans différents types d'applications, tels que dans les réseaux de transmission électrique, dans la distribution électrique et dans les usines en amont d'installations électriques.

Un transformateur de puissance haute tension conventionnel comprend un circuit magnétique sur lequel sont enroulés au moins un enroulement primaire côté haute tension (HT) et au moins un enroulement secondaire côté basse tension (BT). Dans le cas d'un transformateur de puissance haute tension immergé, le circuit magnétique et les enroulements sont disposés dans une cuve remplie d'une huile diélectrique pour permettre l'isolation diélectrique des enroulements entre eux ainsi que le refroidissement du transformateur. Un tel transformateur de puissance immergé est, par exemple, un transformateur de distribution HTA/BT de type ONAN (de l'anglais « Oil Natural Air Natural », c'est-à-dire à circulations naturelles de l'huile dans le transformateur et de l'air sur ses surfaces extérieures).

Des systèmes de protection existants permettent de détecter des anomalies de fonctionnement dans le transformateur et de déconnecter le transformateur du réseau en cas de détection d'anomalie afin d'en assurer la sécurité. De par leur rôle stratégique dans le réseau, les transformateurs doivent faire l'objet d'une surveillance accrue. Afin d'en assurer une bonne maintenance sans nuire à leur disponibilité, de nombreux modules de détection d'anomalie ont été mis au point, tels que le relais Buchholz.

Le module de détection d'anomalie DGPT2® (« Détection Gaz Pression Température 2 seuils »), de la société AUTOMATION2000®, est un relais de protection existant pour transformateur immergé, similaire au relais Buchholz, le module DGPT2® étant équipé de divers détecteurs qui lui permettent de détecter une anomalie de présence de gaz, une anomalie de surpression, une anomalie de dépassement de premier seuil de température ou une anomalie de dépassement de second seuil de température à l'intérieur du transformateur. Le module de détection d'anomalie DMCR® (« Dispositif de Mesure et de Contrôle de Régime »), de la société IDEF SYSTEMES®, est un autre relais de protection existant similaire pour transformateur immergé.

Ces modules de détection d'anomalie existants DGPT2®/DMCR® répondent aux normes NF C13-100 et NF C13-200 des installations électriques à haute tension, mais ne répondent pas complètement à la norme NF C17-300 des conditions d'utilisation des diélectriques liquides. En effet, les modules de protection existants coupent uniquement le primaire (côté HT) du transformateur mais pas le secondaire (côté BT) du transformateur, de telle sorte que le transformateur en défaillance n'est pas complètement isolé du réseau. De plus, aucune sécurité n'empêche la remise en fonctionnement de la cellule de disjoncteur HT du transformateur lorsque l'anomalie détectée est toujours présente, le personnel de maintenance réenclenchant la plupart du temps la cellule de disjoncteur HT sans connaître la raison du déclenchement et sans savoir si l'anomalie est ou non résolue, ce qui pose un problème important de sécurité. Les modules de protection actuels n'offrent ainsi pas une sécurité maximale, ce qui occasionne chaque année des coûts exorbitants pour les assurances et occasionne des blessés graves voire des décès. En outre, les modules de protection actuels ne permettent pas de préciser au personnel de maintenance la nature exacte de l'anomalie, telle qu'un dépassement de température, une présence de gaz ou une surpression, de manière à permettre une intervention plus rapide sur le transformateur de puissance en défaillance.

La présente invention vise à résoudre les inconvénients de l'état antérieur de la technique, en proposant un module de sécurité pour un transformateur de puissance haute tension, ledit module de sécurité comprenant un moyen d'indication d'anomalie et étant configuré pour déclencher des disjoncteurs côté basse tension et côté haute tension en fonction de la détection d'anomalie, ce qui permet d'améliorer la sécurité en indiquant la nature de l'anomalie à l'aide du moyen d'indication d'anomalie et en isolant complètement le transformateur de puissance haute tension en cas d'anomalie grave.

La présente invention a donc pour objet un module de sécurité pour un transformateur de puissance haute tension, HT, équipé d'un module de détection d'anomalie configuré pour détecter au moins une anomalie de fonctionnement dans le transformateur de puissance HT, caractérisé par le fait que : le module de sécurité comprend un boîtier configuré pour être relié au module de détection d'anomalie, le boîtier comprenant un moyen d'indication d'anomalie configuré pour indiquer au moins une anomalie signalée par le module de détection d'anomalie ; le boîtier est en outre configuré pour être relié à un disjoncteur côté basse tension, BT, du transformateur de puissance HT et à un disjoncteur côté HT du transformateur de puissance HT, le module de sécurité étant configuré pour déclencher les disjoncteurs côté BT et HT en fonction de la détection d'anomalie reçue en provenance du module de détection d'anomalie de manière à isoler le transformateur de puissance HT ; et le module de sécurité est configuré pour être alimenté par une alimentation indépendante.

Ainsi, le moyen d'indication d'anomalie permet d'indiquer la nature de la ou des anomalies détectées par le module de détection d'anomalie, de manière à indiquer au personnel de maintenance la raison du déclenchement des disjoncteurs du transformateur de puissance, de manière à permettre une intervention plus rapide sur le transformateur de puissance en défaillance.

De plus, le déclenchement à la fois du disjoncteur côté BT et du disjoncteur côté HT en cas de détection d'au moins une anomalie grave dans le transformateur de puissance permet d'isoler complètement le transformateur de puissance vis-à-vis du réseau, ce qui permet d'améliorer la sécurité.

Le boîtier du module de sécurité est soit déporté par rapport au transformateur de puissance HT, soit disposé sur le transformateur de puissance HT.

L'alimentation indépendante alimentant le module de sécurité est indépendante des tensions haute et basse du transformateur de puissance et permet la mise sous tension du module de sécurité même lorsque le transformateur de puissance est mis hors tension.

Le module de sécurité peut ainsi gérer les différentes signalisations d'anomalie même après la mise hors tension du transformateur de puissance, le moyen d'indication d'anomalie permettant au personnel de maintenance de bien déterminer l'anomalie en cause et de réagir au plus vite pour isoler le transformateur de puissance, ce qui permet de protéger les installations et le personnel de maintenance et d'éviter des incendies.

Selon une caractéristique particulière de l'invention, le moyen d'indication d'anomalie est configuré pour indiquer au moins une anomalie du transformateur de puissance HT signalée par le module de détection d'anomalie parmi un dépassement de premier seuil de température dans le transformateur de puissance HT, un dépassement de deuxième seuil de température dans le transformateur de puissance HT, une présence de gaz dans le transformateur de puissance HT et une surpression dans le transformateur de puissance HT. Toute autre anomalie ou état d'un ou plusieurs composants du transformateur de puissance HT pourrait également être signalée par le module de détection d'anomalie au module de sécurité, sans s'éloigner du cadre de la présente invention.

Ainsi, le module de sécurité est complémentaire d'un module de détection d'anomalie de type DGPT2® ou DMCR® pour un transformateur de puissance immergé dans une huile diélectrique, le module de détection d'anomalie comprenant un capteur de température pour mesurer la température de l'huile diélectrique, un capteur de gaz pour détecter une présence de gaz dans l'huile diélectrique et un capteur de pression pour mesurer la pression de l'huile diélectrique.

Le second seuil de température est supérieur au premier seuil de température. Les premier et second seuils de température peuvent par exemple être respectivement de 90°C et 100°C, sans que ces valeurs soient limitatives dans le contexte de l'invention.

Le seuil de détection de surpression peut par exemple être de 0,2 bar, sans que cette valeur soit limitative dans le contexte de l'invention.

Le capteur de présence de gaz est, de préférence, un capteur magnétique configuré pour détecter des particules métalliques dans l'huile diélectrique, lesdites particules métalliques provenant de la dégradation des entrefers (noyaux métalliques centraux).

Selon une caractéristique particulière de l'invention, le module de sécurité est configuré pour déclencher les disjoncteurs côté BT et HT lorsque le module de sécurité reçoit, en provenance du module de détection d'anomalie, au moins l'une parmi une détection de dépassement de deuxième seuil de température, une détection de présence de gaz et une détection de surpression.

Ainsi, les trois anomalies précitées sont considérées comme des anomalies graves qui nécessitent un déclenchement des disjoncteurs côté BT et HT afin d'isoler le transformateur de puissance dans le réseau.

Selon une caractéristique particulière de l'invention, le moyen d'indication d'anomalie est au moins l'un d'un écran, apte à afficher une ou plusieurs anomalies, et d'un ou plusieurs voyants lumineux dont l'activation dépend de la ou des anomalies détectées.

Ainsi, l'écran et le ou les voyants lumineux permettent au personnel de maintenance de bien déterminer la ou les anomalies en cause afin de réagir au plus vite pour protéger les installations et éviter des incendies, et de ne pas remettre le transformateur de puissance HT en fonctionnement tant que l'anomalie n'a pas été résolue.

Selon une caractéristique particulière de l'invention, le module de sécurité comprend en outre au moins une alarme parmi une alarme sonore et une alarme visuelle externe au boîtier et reliée à ce dernier, le module de sécurité étant configuré pour activer ladite alarme lorsque le module de sécurité reçoit, en provenance du module de détection d'anomalie, une détection d'anomalie.

Ainsi, ladite alarme sonore et/ou visuelle permet de signaler l'anomalie à des personnes situées à distance du module de sécurité. Il peut bien entendu y avoir plusieurs alarmes sonores et/ou visuelles.

De préférence, ladite alarme sonore et/ou visuelle est uniquement activée lors d'une détection de dépassement de premier seuil de température.

Selon une caractéristique particulière de l'invention, le module de sécurité est en outre configuré pour empêcher le réenclenchement du disjoncteur côté HT et du disjoncteur côté BT tant qu'au moins une anomalie est signalée au module de sécurité par le module de détection d'anomalie.

Ainsi, le module de sécurité permet d'empêcher la remise en route du transformateur de puissance tant que le défaut/l'anomalie est présent(e), le personnel de maintenance ne pouvant réenclencher les disjoncteurs côté BT et HT que lorsque le défaut n'est plus présent, ce qui permet d'améliorer la sécurité et d'éviter les risques d'explosions et d'incendies.

Selon une caractéristique particulière de l'invention, le boîtier comprend en outre un bouton d'acquittement d'anomalie configuré, lorsqu'il est actionné et qu'aucune anomalie n'est signalée au module de sécurité par le module de détection d'anomalie, pour autoriser le réenclenchement du disjoncteur côté HT et du disjoncteur côté BT.

Ainsi, dans le cas où l'anomalie n'est plus présente, le personnel de maintenance doit tout d'abord actionner le bouton d'acquittement d'anomalie avant de pouvoir réenclencher les disjoncteurs côté BT et HT pour remettre le transformateur de puissance sous tension.

Dans le cas où l'anomalie est toujours présente, l'actionnement du bouton d'acquittement d'anomalie n'a aucun effet, le personnel de maintenance ne pouvant pas dans ce cas réenclencher les disjoncteurs côté BT et HT.

Selon une caractéristique particulière de l'invention, l'alimentation indépendante est une batterie indépendante, disposée de préférence à l'intérieur du boîtier. L'alimentation indépendante peut par exemple être constituée par des piles ou des accumulateurs, rechargeables ou non, par exemple de type lithium-ion.

Selon une caractéristique particulière de l'invention, la batterie indépendante est une batterie rechargeable configurée pour être rechargée par la basse tension du transformateur de puissance HT. Le boîtier peut avantageusement comprendre en outre un voyant lumineux d'indication de recharge configuré pour indiquer la recharge de la batterie par la basse tension du transformateur de puissance HT.

Ainsi, la batterie indépendante permet d'assurer la mise sous tension du module de sécurité lorsque le transformateur est en défaillance.

La batterie indépendante est rechargée par la basse tension du transformateur de puissance lorsque ce dernier est en fonctionnement normal, le voyant lumineux d'indication de recharge permettant de signaler la recharge de la batterie par la basse tension.

La batterie indépendante a de préférence une autonomie d'au moins trois à quatre heures, ce qui laisse le temps au personnel de maintenance d'intervenir sur le transformateur de puissance en cas d'anomalie.

Selon une caractéristique particulière de l'invention, le boîtier est en outre configuré pour être relié à une thermistance disposée dans le transformateur de puissance HT. Le boîtier peut avantageusement comprendre en outre un écran d'affichage configuré pour afficher la température mesurée par ladite thermistance.

Ainsi, la thermistance, qui est immergée dans l'huile diélectrique du transformateur immergé, permet de mesurer précisément la température de l'huile, et l'écran d'affichage permet d'indiquer au personnel de maintenance la température mesurée de l'huile.

Selon une caractéristique particulière de l'invention, le module de sécurité comprend en outre un module d'émission de message d'anomalie configuré pour envoyer, de manière sans fil ou filaire, au moins un message d'anomalie en cas de réception d'une détection d'anomalie en provenance du module de détection d'anomalie.

Ainsi, le module d'émission de message d'anomalie permet d'envoyer un message d'alerte précis, tel qu'un message texte (SMS), un courrier électronique ou un message audio, aux responsables du site d'exploitation et/ou au personnel de maintenance, ce qui permet une traçabilité des anomalies.

Le module d'émission de message d'anomalie est, de préférence, un module GSM (« système mondial de communication avec les mobiles »), mais pourrait également être un module Wifi, Bluetooth, liaison RJ45 informatique permettant l'hébergement des alertes sur un nuage informatique par l'intermédiaire d'un logiciel de gestion des alertes développé spécifiquement (Internet des Objets, ayant pour acronyme en anglais IOT), sans s'écarter du cadre de la présente invention.

Selon une caractéristique particulière de l'invention, le module de sécurité est configuré pour être relié au module de détection d'anomalie de manière sans fil ou filaire.

Selon une caractéristique particulière de l'invention, le module de sécurité est configuré pour être relié aux disjoncteurs côté BT et HT de manière sans fil ou filaire.

Selon une caractéristique particulière de l'invention, le module de sécurité comprend en outre un contrôleur et de la mémoire contrôlée par le contrôleur.

La mémoire permet de stocker un journal des anomalies détectées et facultativement de leur résolution.

La mémoire peut être interrogeable par une prise adéquate sur le boîtier du module de sécurité, par une liaison filaire permanente ou par une liaison sans fil.

Selon une caractéristique particulière de l'invention, le module de sécurité comprend en outre des moyens de communication à distance reliés au contrôleur.

Les moyens de communication à distance utilisent de préférence un protocole de communication basse puissance tel que LoRA®, Sigfox®, ou équivalents.

Les moyens de communication à distance permettent d'émettre des données concernant les anomalies détectées stockées dans la mémoire et facultativement des données concernant la résolution des anomalies stockées dans la mémoire.

Les moyens de communication à distance sont également aptes à recevoir des données d'instructions.

La présente invention a également pour objet un ensemble de supervision pour un transformateur de puissance HT, caractérisé par le fait qu'il comprend un module de sécurité tel que décrit ci-dessus et une unité de supervision comprenant au moins un serveur apte à communiquer avec les moyens de communication à distance du module de sécurité.

L'unité de supervision est configurée pour interroger périodiquement le module de sécurité pour connaître son état, pour stocker sur ledit au moins un serveur les anomalies rencontrées par le module de sécurité, pour commander à distance le module de sécurité en fonction des anomalies rencontrées, et pour envoyer des messages/instructions à des intervenants en fonction de l'état du module de sécurité. Le serveur peut être un serveur physique, mais peut également être un stockage dématérialisé, dit en nuage.

La présente invention a en outre pour objet un transformateur de puissance HT équipé d'un module de détection d'anomalie configuré pour détecter au moins une anomalie de fonctionnement dans le transformateur de puissance HT, le transformateur de puissance HT comprenant un module de sécurité tel que décrit ci-dessus ou un ensemble de supervision tel que décrit ci-dessus.

Pour mieux illustrer l'objet de la présente invention, on va en décrire ci-après, à titre illustratif et non limitatif, un mode de réalisation préféré, avec référence aux dessins annexés.

Sur ces dessins :
- la Figure 1 est une vue en perspective d'un transformateur de puissance HT équipé d'un module de détection d'anomalie et d'un module de sécurité selon la présente invention ;
- la Figure 2 est un schéma fonctionnel du transformateur de puissance HT de la Figure 1 équipé du module de détection d'anomalie et du module de sécurité selon la présente invention ; et
- la Figure 3 est un schéma fonctionnel d'un ensemble de supervision pour transformateur de puissance HT selon la présente invention.

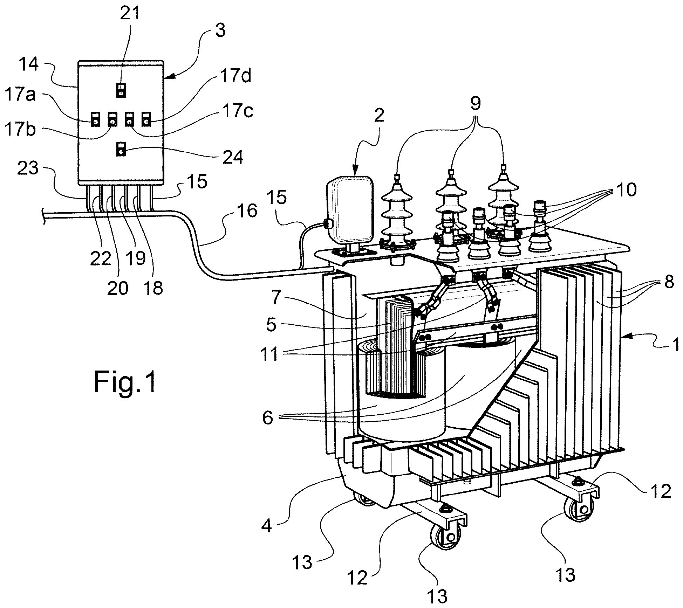

Si l'on se réfère à la Figure 1, on peut voir qu'il y est représenté un transformateur de puissance haute tension 1 équipé d'un module de détection d'anomalie 2 et d'un module de sécurité 3 selon la présente invention.

Le transformateur de puissance HT 1 est un transformateur triphasé de type immergé comprenant une cuve 4 dans laquelle sont disposés un noyau magnétique 5 sur lequel sont enroulés trois enroulements primaires et trois enroulements secondaires 6, les enroulements primaires étant disposés autour des enroulements secondaires, le noyau magnétique 5 et les enroulements 6 étant immergés dans une huile diélectrique 7 pour permettre l'isolation diélectrique des enroulements 6 entre eux ainsi que le refroidissement du transformateur 1.

Le transformateur de puissance 1 représenté à la Figure 1 est un transformateur de distribution HTA/BT de type ONAN (de l'anglais « Oil Natural Air Natural », c'est-à-dire à circulations naturelles de l'huile dans le transformateur et de l'air sur ses surfaces extérieures), les surfaces extérieures de la cuve 4 du transformateur 1 étant munies d'ailettes de refroidissement 8.

Il est à noter que la cuve 4 et l'un des enroulements 6 du transformateur 1 n'ont pas été représentés entièrement à la Figure 1 afin de représenter l'intérieur du transformateur 1.

Le transformateur 1 comprend en outre, sur sa partie supérieure, trois bornes haute tension 9 reliées aux enroulements primaires et quatre bornes basse tension 10 reliées aux enroulements secondaires, les bornes 9 et 10 étant reliées aux enroulements 6 respectifs par une structure métallique 11.

La cuve 4 du transformateur 1 est disposée sur deux traverses 12 montées sur roulettes 13, de manière à permettre le déplacement du transformateur 1. Il est à noter que le transformateur 1 pourrait également être fixe, sans s'écarter du cadre de la présente invention.

Le module de détection d'anomalie 2 est disposé sur la partie supérieure du transformateur 1 et est en liaison fluidique avec l'intérieur du transformateur 1, notamment avec l'huile diélectrique 7 du transformateur 1.

Le module de détection d'anomalie 2 est par exemple de type DGPT2® ou DMCR®, et est configuré pour détecter au moins une anomalie de fonctionnement dans le transformateur de puissance 1.

Le module de détection d'anomalie 2 permet de détecter au moins une anomalie de fonctionnement du transformateur de puissance 1 parmi un dépassement de premier seuil de température dans le transformateur de puissance 1, un dépassement de deuxième seuil de température dans le transformateur de puissance 1, une présence de gaz dans le transformateur de puissance 1 et une surpression dans le transformateur de puissance 1.

Le module de détection d'anomalie 2 comprend pour cela un capteur de température pour mesurer la température de l'huile diélectrique 7, un capteur de gaz pour détecter une présence de gaz dans l'huile diélectrique 7 et un capteur de pression pour mesurer la pression de l'huile diélectrique 7.

Le second seuil de température est supérieur au premier seuil de température, les premier et second seuils de température pouvant par exemple être respectivement de 90°C et 100°C, sans que ces valeurs soient limitatives.

Le seuil de détection de surpression peut par exemple être de 0,2 bar, sans que cette valeur soit limitative.

Le capteur de présence de gaz est, de préférence, un capteur magnétique configuré pour détecter des particules métalliques dans l'huile diélectrique 7, lesdites particules métalliques provenant de la dégradation des entrefers.

Le module de sécurité 3 comprend un boîtier 14 déporté par rapport au transformateur de puissance HT 1. Il est à noter que le boîtier 14 pourrait également être disposé sur le transformateur de puissance 1, sans s'écarter du cadre de la présente invention.

Le boîtier 14 du module de sécurité 3 est relié au module de détection d'anomalie 2 à l'aide d'un premier câble 15 parmi un faisceau de câbles 16, mais pourrait également être relié de manière sans fil, sans s'écarter du cadre de la présente invention.

Le boîtier 14 comprend, sur sa face avant, quatre voyants lumineux 17a à 17d configurés pour indiquer des anomalies de fonctionnement signalées par le module de détection d'anomalie 2.

Les voyants lumineux 17a à 17d sont, de préférence, de couleur rouge, mais pourraient également être d'une couleur quelconque, sans s'écarter du cadre de la présente invention.

Il est à noter que le boîtier 14 pourrait également comprendre un nombre quelconque de voyants lumineux dont l'activation dépend de la ou des anomalies détectées et/ou un écran apte à afficher la ou les anomalies détectées, sans s'écarter du cadre de la présente invention.

Le premier voyant lumineux 17a est configuré pour indiquer un dépassement de premier seuil de température dans le transformateur de puissance HT 1 signalé par le module de détection d'anomalie 2, le premier voyant lumineux 17a s'allumant lorsque le dépassement de premier seuil de température est détecté par le module de détection d'anomalie 2.

Le second voyant lumineux 17b est configuré pour indiquer un dépassement de deuxième seuil de température dans le transformateur de puissance HT 1 signalé par le module de détection d'anomalie 2, le second voyant lumineux 17b s'allumant lorsque le dépassement de deuxième seuil de température est détecté par le module de détection d'anomalie 2.

Le troisième voyant lumineux 17c est configuré pour indiquer une présence de gaz dans le transformateur de puissance HT 1 signalée par le module de détection d'anomalie 2, le troisième voyant lumineux 17c s'allumant lorsque la présence de gaz est détectée par le module de détection d'anomalie 2.

Le quatrième voyant lumineux 17d est configuré pour indiquer une surpression dans le transformateur de puissance HT 1 signalée par le module de détection d'anomalie 2, le quatrième voyant lumineux 17d s'allumant lorsque la surpression est détectée par le module de détection d'anomalie 2.

Les voyants lumineux 17a à 17d permettent ainsi au personnel de maintenance de bien déterminer la nature de la ou des anomalies en cause afin de réagir au plus vite pour protéger les installations et éviter des incendies.

Le boîtier 14 est en outre relié à un disjoncteur côté BT du transformateur de puissance 1 (non représenté à la Figure 1) par un second câble 18 du faisceau de câbles 16 et à un disjoncteur côté HT du transformateur de puissance 1 (non représenté à la Figure 1) par un troisième câble 19 du faisceau de câbles 16.

Il est à noter que le boîtier 14 pourrait également être relié de manière sans fil aux disjoncteurs côté BT et HT, sans s'écarter du cadre de la présente invention.

Le module de sécurité 3 est configuré pour déclencher les disjoncteurs côté BT et HT en cas de détection d'au moins une anomalie signalée par le module de détection d'anomalie 2, de manière à isoler le transformateur de puissance 1 dans le réseau.

Le module de sécurité 3 est alimenté par une batterie indépendante (non représentée à la Figure 1), disposée à l'intérieur du boîtier 14, qui permet la mise sous tension du module de sécurité 3 même lorsque le transformateur de puissance 1 est mis hors tension par les disjoncteurs côté BT et HT.

La batterie indépendante est, de préférence, une batterie rechargeable configurée pour être rechargée par la basse tension du transformateur de puissance 1, la basse tension du transformateur de puissance 1 étant reliée au boîtier 14 à l'aide d'un quatrième câble 20 du faisceau de câbles 16.

Le boîtier 14 comprend en outre un voyant lumineux d'indication de recharge 21 configuré pour indiquer une recharge de la batterie indépendante par la basse tension du transformateur de puissance 1, le voyant lumineux d'indication de recharge 21 s'éteignant lorsque la basse tension, de préférence de 220V, est coupée.

Le module de sécurité 3 comprend en outre une alarme sonore et visuelle (non représentée à la Figure 1) externe au boîtier 14 et reliée à ce dernier à l'aide d'un cinquième câble 22 du faisceau de câbles 16. Le module de sécurité 3 est configuré pour activer l'alarme sonore et visuelle lors d'une détection de dépassement de premier seuil de température par le module de détection d'anomalie 2.

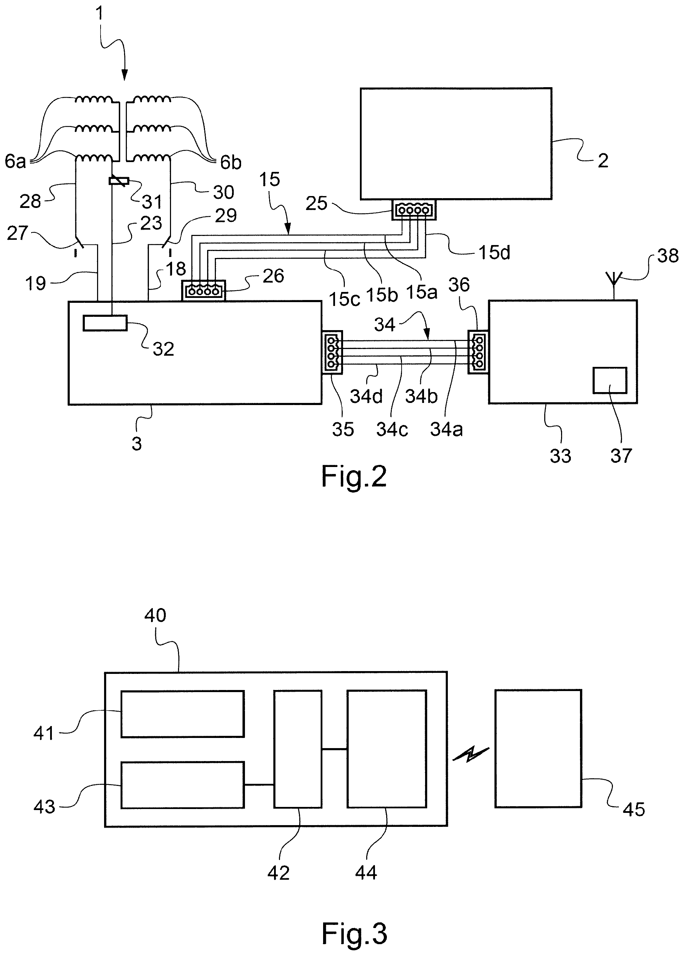

Le faisceau de câbles 16 comprend en outre un sixième câble 23 configuré pour relier le boîtier 14 à une thermistance (non représentée à la Figure 1 et décrite plus en détail à la Figure 2).

Le boîtier 14 comprend en outre un bouton-poussoir d'acquittement d'anomalie 24 configuré, lorsqu'il est actionné et qu'aucune anomalie n'est signalée au module de sécurité 3 par le module de détection d'anomalie 2, pour autoriser le réenclenchement du disjoncteur côté HT et du disjoncteur côté BT.

Si l'on se réfère à la Figure 2, on peut voir qu'il y est représenté un schéma fonctionnel du transformateur de puissance 1 équipé du module de détection d'anomalie 2 et du module de sécurité 3.

Le câble 15 est relié au module de détection d'anomalie 2 à l'aide d'un connecteur 25 et est relié au module de sécurité 3 à l'aide d'un connecteur 26.

Le câble 15 comprend une première voie 15a de signal de détection de dépassement de premier seuil de température, une seconde voie 15b de signal de détection de dépassement de deuxième seuil de température, une troisième voie 15c de signal de détection présence de gaz et une quatrième voie 15d de signal de détection de surpression.

Il est à noter que le module de sécurité 3 pourrait également être relié au module de détection d'anomalie 2 de manière sans fil, sans s'écarter du cadre de la présente invention.

Le transformateur de puissance 1 comprend trois enroulements primaires 6a côté HT et trois enroulements secondaires 6b côté BT.

Les trois enroulements primaires 6a sont reliés au disjoncteur côté HT 27 à l'aide d'un câble HT 28, et les trois enroulements secondaires 6b sont reliés au disjoncteur côté BT 29 à l'aide d'un câble BT 30.

Les disjoncteurs côté HT et BT 27, 29 sont des cellules disjoncteur à isolement dans l'air ou dans le gaz, telles que celles de type SM6, FBX ou RM6 de la société Schneider Electric®.

Le module de sécurité 3 est relié aux disjoncteurs côté HT et BT 27, 29 par les câbles 19 et 18.

Il est à noter que le module de sécurité 3 pourrait également être relié aux disjoncteurs côté HT et BT 27, 29 de manière sans fil, sans s'écarter du cadre de la présente invention.

Le module de sécurité 3 est configuré pour déclencher les disjoncteurs côté HT et BT 27, 29 lorsque le module de sécurité 3 reçoit, en provenance du module de détection d'anomalie 2, au moins l'une parmi une détection de dépassement de deuxième seuil de température, une détection de présence de gaz et une détection de surpression.

Le module de sécurité 3 est en outre configuré pour empêcher le réenclenchement du disjoncteur côté HT 27 et du disjoncteur côté BT 29 tant qu'au moins une anomalie est signalée au module de sécurité 3 par le module de détection d'anomalie 2.

Dans le cas où l'au moins une anomalie n'est plus présente, le personnel de maintenance doit tout d'abord actionner le bouton d'acquittement d'anomalie 24 avant de pouvoir réenclencher les disjoncteurs côté HT et BT 27, 29 pour remettre le transformateur de puissance 1 sous tension.

Dans le cas où l'au moins une anomalie est toujours présente, l'actionnement du bouton d'acquittement d'anomalie 24 n'a aucun effet, le personnel de maintenance ne pouvant pas dans ce cas réenclencher les disjoncteurs côté HT et BT 27, 29.

Le module de sécurité 3 est relié à la thermistance 31 à l'aide du câble 23, la thermistance 31 étant immergée dans l'huile diélectrique 7 du transformateur de puissance 1 pour mesurer précisément la température de l'huile diélectrique 7. Le module de sécurité 3 comprend en outre un écran d'affichage 32 configuré pour afficher la température mesurée par la thermistance 31.

Le module de sécurité 3 est en outre relié à un module d'émission de message d'anomalie 33 à l'aide d'un câble 34. Le câble 34 est relié au module de sécurité 3 à l'aide d'un connecteur 35 et est relié au module d'émission de message d'anomalie 33 à l'aide d'un connecteur 36.

Le câble 34 comprend une première voie 34a de signal de détection de dépassement de premier seuil de température, une seconde voie 34b de signal de détection de dépassement de deuxième seuil de température, une troisième voie 34c de signal de détection présence de gaz et une quatrième voie 34d de signal de détection de surpression.

Le module d'émission de message d'anomalie 33 est configuré pour envoyer de manière sans fil au moins un message d'anomalie en cas de réception d'une détection d'anomalie.

Le module d'émission de message d'anomalie 33 est un module GSM (« système mondial de communication avec les mobiles ») comprenant une carte SIM 37 et une antenne d'émission-réception 38.

Il est à noter que le module d'émission de message d'anomalie 33 pourrait également être un module Wifi, Bluetooth, liaison RJ45 informatique permettant l'hébergement des alertes sur un nuage informatique par l'intermédiaire d'un logiciel de gestion des alertes développé spécifiquement (Internet des Objets, ayant pour acronyme en anglais IOT), sans s'écarter du cadre de la présente invention.

Le module d'émission de message d'anomalie 33 permet d'envoyer un message d'alerte, tel qu'un message texte (SMS), un courrier électronique ou un message audio, aux responsables du site d'exploitation et/ou au personnel de maintenance, ledit message d'alerte contenant la nature exacte de la ou des anomalies détectées ainsi que l'identifiant du transformateur de puissance 1 associé.

Si l'on se réfère à la Figure 3, on peut voir qu'il y est représenté un schéma fonctionnel d'un ensemble de supervision pour transformateur de puissance HT selon la présente invention.

L'ensemble de supervision comprend un module de sécurité 40 similaire, en termes de structure et de fonctionnement, au module de sécurité 3 représenté à la Figure 1.

Le module de sécurité 40 comprend une batterie 41 disposée à l'intérieur de celui-ci et configurée pour alimenter les différents composants électriques du module de sécurité.

Le module de sécurité 40 comprend en outre un contrôleur 42 et de la mémoire 43 contrôlée par le contrôleur 42, la mémoire 43 permettant de stocker un journal des anomalies détectées et facultativement de leur résolution, la mémoire 43 étant interrogeable par une prise adéquate sur le module de sécurité 40, par une liaison filaire permanente ou par une liaison sans fil.

Le module de sécurité 40 comprend en outre des moyens de communication à distance 44 reliés au contrôleur 42, les moyens de communication à distance 44 utilisant de préférence un protocole de communication basse puissance tel que LoRA®, Sigfox®, ou équivalents, les moyens de communication à distance 44 permettant d'émettre des données concernant les anomalies détectées stockées dans la mémoire 43 et facultativement des données concernant la résolution des anomalies stockées dans la mémoire 43.

L'ensemble de supervision comprend en outre une unité de supervision comprenant un serveur 45 apte à communiquer avec les moyens de communication à distance 44 du module de sécurité 40, l'unité de supervision étant configurée pour interroger périodiquement le module de sécurité 40 pour connaître son état, pour stocker sur ledit serveur 45 les anomalies rencontrées par le module de sécurité 40, pour commander à distance le module de sécurité 40 en fonction des anomalies rencontrées, et pour envoyer des messages/instructions à des intervenants en fonction de l'état du module de sécurité 40.

## Revendications

1. Module de sécurité (3, 40) pour un transformateur de puissance haute tension, HT, (1) équipé d'un module de détection d'anomalie (2) configuré pour détecter au moins une anomalie de fonctionnement dans le transformateur de puissance HT (1), **caractérisé par le fait que** :
- le module de sécurité (3, 40) comprend un boîtier (14) configuré pour être relié au module de détection d'anomalie (2), le boîtier (14) comprenant un moyen d'indication d'anomalie configuré pour indiquer au moins une anomalie signalée par le module de détection d'anomalie (2) ;
- le boîtier (14) est en outre configuré pour être relié à un disjoncteur côté basse tension, BT, (29) du transformateur de puissance HT (1) et à un disjoncteur côté HT (27) du transformateur de puissance HT (1), le module de sécurité (3, 40) étant configuré pour déclencher les disjoncteurs côté BT (29) et HT (27) en fonction de la détection d'anomalie reçue en provenance du module de détection d'anomalie (2) de manière à isoler le transformateur de puissance HT (1) ; et
- le module de sécurité (3, 40) est configuré pour être alimenté par une alimentation indépendante.

2. Module de sécurité (3, 40) selon la revendication 1, **caractérisé par le fait que** le moyen d'indication d'anomalie est configuré pour indiquer au moins une anomalie du transformateur de puissance HT (1) signalée par le module de détection d'anomalie (2) parmi un dépassement de premier seuil de température dans le transformateur de puissance HT (1), un dépassement de deuxième seuil de température dans le transformateur de puissance HT (1), une présence de gaz dans le transformateur de puissance HT (1) et une surpression dans le transformateur de puissance HT (1).

3. Module de sécurité (3, 40) selon la revendication 2, **caractérisé par le fait que** le module de sécurité (3, 40) est configuré pour déclencher les disjoncteurs côté BT (29) et HT (27) lorsque le module de sécurité (3, 40) reçoit, en provenance du module de détection d'anomalie (2), au moins l'une parmi une détection de dépassement de deuxième seuil de température, une détection de présence de gaz et une détection de surpression.

4. Module de sécurité (3, 40) selon l'une des revendications 1 et 3, **caractérisé par le fait que** le moyen d'indication d'anomalie est au moins l'un d'un écran, apte à afficher une ou plusieurs anomalies, et d'un ou plusieurs voyants lumineux (17a, 17b, 17c, 17d) dont l'activation dépend de la ou des anomalies détectées.

5. Module de sécurité (3, 40) selon l'une des revendications 1 à 4, **caractérisé par le fait que** le module de sécurité (3, 40) comprend en outre au moins une alarme parmi une alarme sonore et une alarme visuelle externe au boîtier (14) et reliée à ce dernier, le module de sécurité (3, 40) étant configuré pour activer ladite alarme lorsque le module de sécurité (3, 40) reçoit, en provenance du module de détection d'anomalie (2), une détection d'anomalie.

6. Module de sécurité (3, 40) selon l'une des revendications 1 à 5, **caractérisé par le fait que** le module de sécurité (3, 40) est en outre configuré pour empêcher le réenclenchement du disjoncteur côté HT (27) et du disjoncteur côté BT (29) tant qu'au moins une anomalie est signalée au module de sécurité (3, 40) par le module de détection d'anomalie (2).

7. Module de sécurité (3, 40) selon l'une des revendications 1 à 6, **caractérisé par le fait que** le boîtier (14) comprend en outre un bouton d'acquittement d'anomalie (24) configuré, lorsqu'il est actionné et qu'aucune anomalie n'est signalée au module de sécurité (3, 40) par le module de détection d'anomalie (2), pour autoriser le réenclenchement du disjoncteur côté HT (27) et du disjoncteur côté BT (29).

8. Module de sécurité (3, 40) selon l'une des revendications 1 à 7, **caractérisé par le fait que** l'alimentation indépendante est une batterie indépendante (41), disposée de préférence à l'intérieur du boîtier (14).

9. Module de sécurité (3, 40) selon la revendication 8, **caractérisé par le fait que** la batterie indépendante (41) est une batterie rechargeable configurée pour être rechargée par la basse tension du transformateur de puissance HT (1).

10. Module de sécurité (3, 40) selon l'une des revendications 1 à 9, **caractérisé par le fait que** le boîtier (14) est en outre configuré pour être relié à une thermistance (31) disposée dans le transformateur de puissance HT (1).

11. Module de sécurité (3, 40) selon l'une des revendications 1 à 10, **caractérisé par le fait que** le module de sécurité (3, 40) comprend en outre un module d'émission de message d'anomalie (33) configuré pour envoyer, de manière sans fil ou filaire, au moins un message d'anomalie en cas de réception d'une détection d'anomalie en provenance du module de détection d'anomalie (2) .

12. Module de sécurité (3, 40) selon l'une des revendications 1 à 11, **caractérisé par le fait que** le module de sécurité (3, 40) est configuré pour être relié au module de détection d'anomalie (2) de manière sans fil ou filaire.

13. Module de sécurité (3, 40) selon l'une des revendications 1 à 12, **caractérisé par le fait que** le module de sécurité (3, 40) est configuré pour être relié aux disjoncteurs côté BT (29) et HT (27) de manière sans fil ou filaire.

14. Module de sécurité (40) selon l'une des revendications 1 à 13, **caractérisé par le fait qu'**il comprend en outre un contrôleur (42) et de la mémoire (43) contrôlée par le contrôleur (42).

15. Module de sécurité (40) selon la revendication 14, **caractérisé par le fait qu'**il comprend en outre des moyens de communication à distance (44) reliés au contrôleur (42).

16. Ensemble de supervision pour un transformateur de puissance HT (1), **caractérisé par le fait qu'**il comprend un module de sécurité (40) selon la revendication 15 et une unité de supervision comprenant au moins un serveur (45) apte à communiquer avec les moyens de communication à distance (44) du module de sécurité (40).

17. Transformateur de puissance HT (1) équipé d'un module de détection d'anomalie (2) configuré pour détecter au moins une anomalie de fonctionnement dans le transformateur de puissance HT (1), le transformateur de puissance HT (1) comprenant un module de sécurité (3, 40) selon l'une des revendications 1 à 15 ou un ensemble de supervision selon la revendication 16.
